# DEMANDE DE BREVET EUROPEEN

(11) **EP 3 292 974 A1**
(43) Date de publication de la demande: **14.03.2018**
(21) Numéro de dépôt: 17187346.6
(22) Date de dépôt: 22.08.2017
(51) Int. Cl.: B29C 44/12, B29L 31/58, B60N 2/00, B29K 75/00

(54) **INTÉGRATION D'UN DISPOSITIF DANS UN ÉLÉMENT DE SIÈGE POUR VÉHICULE AUTOMOBILE**

(30) Priorité: 09.09.2016 FR 1658441
(71) Demandeur: FAURECIA Sièges d'Automobile, 92000 Nanterre (FR)
(72) Inventeur: MAUFFREY, Jean-Marie, 90300 VALDORE (FR); PARRAIN, Quentin, 70200 FRENCHEVELLE (FR); BOQUET, Mathieu, 91370 VERRIERES LE BUISSON (FR)
(74) Mandataire: Thibon, Laurent

(57) **Abrégé**

L'invention concerne un procédé d'intégration d'un dispositif (10) dans une garniture d'élément de siège en mousse comportant les étapes suivantes : placer le dispositif dans un sac plastique (22) ou l'entourer d'un film plastique ; placer l'ensemble dans un moule d'injection (3) ; et injecter de la mousse (M) afin de réaliser l'élément de siège d'une seule pièce.

## Description

### Domaine

La présente description concerne de façon générale les sièges pour véhicules automobiles et, plus particulièrement, l'intégration d'un dispositif dans une garniture d'un élément de siège en mousse.

### Etat de l'art antérieur

De plus en plus souvent, on cherche à intégrer, dans des éléments de sièges, des dispositifs ou équipements variés. Par exemple, les appuis-tête intègrent des mécanismes de réglage en hauteur de l'appui-tête, des assises ou dossiers de siège intègrent des capteurs de présence, de température, etc.

Une telle intégration peut poser problème, en particulier lorsque l'élément de siège est réalisé par injection de mousse dans un moule. En effet, le dispositif ne peut pas être placé dans le moule avant injection de la mousse car, lors de l'injection, de la mousse pourrait atteindre des parties du dispositif et entraver son fonctionnement ultérieur.

Il existe un besoin pour intégrer un dispositif dans un élément de siège en mousse, sans risque de dommage au dispositif.

### Résumé

Un mode de réalisation vise à proposer un procédé d'intégration d'un dispositif dans un élément de siège qui pallie tout ou partie des inconvénients des procédés usuels.

Un mode de réalisation propose une solution particulièrement adaptée à l'intégration d'un mécanisme d'appui-tête dans un appui-tête en mousse.

Un mode de réalisation propose un mode de réalisation particulièrement adapté à des capteurs de présence dans une assise ou un dossier de siège.

Ainsi, un mode de réalisation prévoit un procédé d'intégration d'un dispositif dans une garniture d'élément de siège en mousse comportant les étapes suivantes : placer le dispositif dans un sac plastique ou l'entourer d'un film plastique ; placer l'ensemble dans un moule d'injection ; et injecter de la mousse afin de réaliser l'élément de siège d'une seule pièce.

Selon un mode de réalisation, la mousse enrobe le sac ou le film plastique.

Selon un mode de réalisation, le sac ou film est en un matériau choisi parmi le polyuréthane, le polyéthylène à basse densité linéaire et le polyéthylène basse densité.

Selon un mode de réalisation, le sac ou film est en un mélange de polyéthylène et d'amidon.

Selon un mode de réalisation, le dispositif est relié à l'extérieur de l'élément de siège.

Selon un mode de réalisation, une coiffe est placée dans le fond du moule avant injection.

Selon un mode de réalisation, le dispositif est enrobé au moins partiellement d'une couche de mousse avant d'être placé dans le sac ou film.

Un autre mode de réalisation prévoit une garniture d'élément de siège, intégrant un dispositif dans une mousse formée d'une seule pièce.

Selon un mode de réalisation, la garniture est obtenue par la mise en oeuvre du procédé décrit précédemment.

Un autre mode de réalisation prévoit un élément de siège pour véhicule automobile comportant une garniture décrite précédemment.

Selon un mode de réalisation, le siège pour véhicule automobile comprend au moins un élément de siège décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation schématique d'un dispositif à intégrer dans un élément de siège de véhicule automobile ;
la figure 2 est une représentation schématique d'une étape préparatoire à l'intégration du dispositif de la figure 1 dans un élément de siège ;
la figure 3 est une vue en coupe et en perspective schématique d'un moule d'injection de mousse pour réaliser un élément de siège ;
la figure 4 est une représentation schématique de l'élément de siège une fois terminé ;
la figure 5 est une vue en coupe et en perspective schématique d'un exemple d'application à l'intégration d'un mécanisme d'appui-tête ; et
la figure 6 est une vue en coupe d'un exemple d'intégration d'un capteur de présence dans une assise de siège.

### Description détaillée

Par souci de clarté, seuls les étapes et éléments utiles à la compréhension des modes de réalisation qui vont être décrits ont été représentés et seront détaillés. En particulier, la réalisation des autres éléments du siège et notamment de l'armature et de la coiffe n'a pas été détaillée, les modes de réalisation décrits étant compatibles avec les réalisations usuelles de tels éléments.

Il est à noter que, sur les figures, les éléments structurels et/ou fonctionnels communs aux différents modes de réalisation peuvent présenter les mêmes références et peuvent disposer de propriétés structurelles, dimensionnelles et matérielles identiques.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, il est sauf précision contraire fait référence à l'orientation des figures ou à un siège dans sa position normale d'utilisation. Sauf précision contraire, les expressions approximativement, sensiblement et, de l'ordre de, signifient à 10 % près, de préférence à 5 % près.

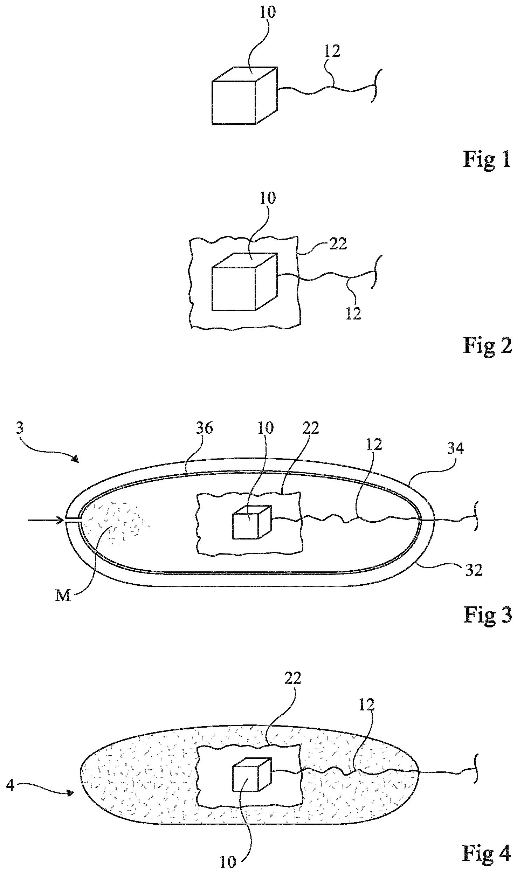

La figure 1 représente, de façon très schématique un dispositif 10 à intégrer dans un élément de siège (non représenté). Le dispositif 10 est symbolisé sous la forme d'un cube mais sa forme dépend de l'application. Il peut s'agir, par exemple, d'un mécanisme d'appui-tête, d'un capteur de présence d'un passager à intégrer dans une assise ou un dossier, etc.

Le dispositif 10 est le cas échéant raccordé à un fil ou câble 12 permettant d'échanger des informations avec l'extérieur de l'élément de siège. Selon un autre exemple, le dispositif 10 est solidaire d'un élément rigide destiné à sortir de l'élément de siège comme, par exemple, des tiges d'appui-tête.

Aujourd'hui, l'intégration de dispositifs du type de celui de la figure 1 dans un élément de siège ne peut se faire qu'après coup, c'est-à-dire que l'élément de siège est réalisé sous la forme de deux coques en mousse qui incluent une réservation pour le dispositif. Cette réservation est généralement définie par le moule d'injection de mousse réalisant les deux demi coques. Puis, le dispositif est placé dans cet espace et enfin les deux coques sont assemblées. Un tel processus est long.

Il n'est cependant pas possible, avec les techniques actuelles, de placer le dispositif dans le moule d'injection afin de réaliser l'élément d'une seule pièce. En effet, lors de l'injection, en raison de la pression, de la mousse s'infiltrerait dans le dispositif et risquerait de nuire à son fonctionnement ultérieur.

Dans les modes de réalisation décrits ci-dessous, on prévoit de placer le dispositif à intégrer dans l'élément de siège, dans un sac ou une poche afin de le protéger de la mousse lors de l'injection. Ainsi, on peut réaliser, en une seule fois, l'opération d'injection de mousse et d'intégration du dispositif. On utilise la terminologie "injecter" mais on comprendra que lorsque l'on se réfère à injecter, cela comprend également des techniques de pulvérisation de mousse, et autres techniques de réalisation de mousse.

La figure 2 représente, de façon très schématique, une étape préparatoire à l'injection de mousse pour réaliser un élément de siège. Le dispositif 10 à intégrer est placé dans une poche ou film de protection 22. Dans le cas d'un dispositif relié par un élément physique à l'extérieur (fil 12), cet élément traverse la poche ou film 22. Le rôle du film 22 est de protéger le dispositif lors de l'injection de la mousse et d'éviter que de la mousse s'insère dans des parties du dispositif.

La figure 3 est une vue schématique d'un moule 3 d'injection de mousse pour réaliser un élément de siège. Dans cet exemple, le moule 3 est constitué de deux parties 32 et 34 rapportées l'une sur l'autre. Le dispositif 10, protégé par son sac 22, est placé dans le moule 3 à la position désirée pour ce dispositif dans sa position finale. Puis, de la mousse M est injectée dans le moule 3 pour former l'élément de siège.

De préférence, un matériau de revêtement 36 en textile tissé ou non, en peau ou en matière synthétique est disposé, avant injection de la mousse, au fond du moule 3 pour réaliser directement la coiffe autour de la garniture.

La figure 4 est une représentation schématique de l'élément de siège une fois terminé.

Une fois la mousse polymérisée, on démoule l'élément de siège et on obtient cet élément 4 intégrant le dispositif 10.

Un avantage est qu'il est désormais possible de réaliser un élément de siège d'une seule pièce par injection de mousse y compris en intégrant un dispositif à l'intérieur. La fabrication est considérablement simplifiée.

Le matériau du sac ou film 22 est choisi pour être étanche à la mousse lors de l'injection afin de protéger le dispositif 10 de tout contact avec la mousse en cours d'injection. Une fois la mousse polymérisée, elle forme une coque autour du dispositif.

Selon un mode de réalisation, le film ou sac 22 est en plastique, par exemple en polyuréthane, en polyéthylène à basse densité linéaire (PEBDL ou LLDPE - Linear Low-density PolyEthylene), en polyéthylène basse densité (PEBD). Selon ce mode de réalisation, ce sac ou film 22 subsiste une fois l'élément terminé.

Selon un autre mode de réalisation, le film ou sac 22 est en un matériau se dégradant une fois la mousse polymérisée. Il s'agit, par exemple, d'un film ou sac à base de polyéthylène et d'amidon qui a la particularité de disparaitre lors de la polymérisation de la mousse ou, plus précisément, de s'intégrer à la mousse. Un tel mode de réalisation est particulièrement adapté à des dispositifs pour lesquels on craint que la présence permanente d'un sac plastique autour du dispositif nuise au fonctionnement. C'est le cas, par exemple, de dispositifs tels que des capteurs où la présence du sac peut nuire à la sensibilité du capteur ou à la transmission des mesures en cas de transmission sans fil.

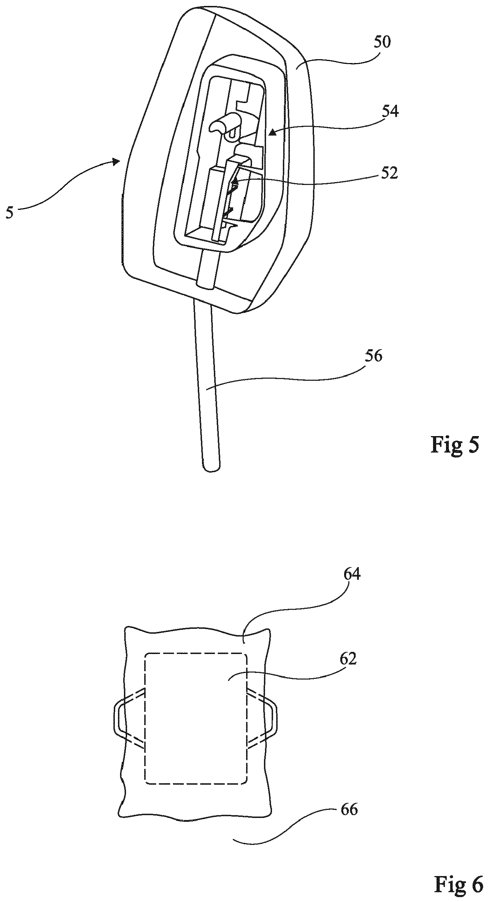

La figure 5 est une vue en coupe et en perspective schématique d'un exemple d'application à l'intégration d'un mécanisme d'appui-tête 5 dans un appui-tête en mousse.

Pour simplifier, la mousse n'a pas été représentée en figure 5 et il s'agit d'une représentation symbolique.

L'extérieur de l'appui-tête est défini par une coiffe ou élément de couverture 50, par exemple disposée au fond du moule avant injection. En variante, cette coiffe 50 est rapportée sur la mousse moulée. Le mécanisme 52 d'appui-tête est placé dans un sac plastique 54. De la mousse est injectée entre la coiffe 50 et le sac 54. Dans l'exemple de l'appui-tête, des tiges 56 sont reliées au mécanisme et traversent donc la poche 54 et la coiffe 50.

La figure 6 est une vue en coupe d'un exemple de capteur de présence 62 à intégrer dans une assise de siège (non représentée).

Ici, le capteur 62 est placé dans un sac 64, de préférence en matériau dégradable lors de la polymérisation de la mousse. Toutefois, selon ce mode de réalisation, on utilise également une pièce 66 en textile renforcé pour protéger le capteur du côté de la coiffe. Le cas échéant, cette partie en textile est la coiffe elle-même.

Un avantage des modes de réalisation qui ont été décrits est qu'il est possible d'intégrer un dispositif dans un élément de siège, y compris dans un procédé de réalisation de l'élément de siège en une seule pièce de mousse.

Un autre avantage est que, selon le matériau choisi pour le film ou sac, celui-ci peut disparaitre et ne pas influer sur le fonctionnement ultérieur.

Divers modes de réalisation ont été décrits. Diverses variantes et modifications apparaîtront à l'homme de l'art. En particulier, la réalisation de la mousse elle-même n'a pas été exposée, les modes de réalisation décrits étant, en eux-mêmes compatibles avec les réalisations usuelles. Par exemple, le dispositif est enrobé au moins partiellement d'une couche de mousse avant d'être placé dans le sac ou film. De plus, la mise en oeuvre pratique des modes de réalisation décrits est à la portée de l'homme du métier à partir des indications fonctionnelles données ci-dessus, que ce soit pour les techniques de moulage ou de choix du matériau formant le sac ou film.

## Revendications

1. Procédé d'intégration d'un dispositif (10, 52, 62) dans une garniture d'élément de siège (4) en mousse comportant les étapes suivantes :
placer le dispositif dans un sac plastique ou l'entourer d'un film plastique (22, 54, 64) ;
placer l'ensemble dans un moule d'injection (3) ; et
injecter de la mousse (M) afin de réaliser l'élément de siège (4) d'une seule pièce.

2. Procédé selon la revendication 1, dans lequel la mousse enrobe le sac ou le film plastique.

3. Procédé selon la revendication 1 ou 2, dans lequel le sac ou film (22) est en un matériau choisi parmi le polyuréthane, le polyéthylène à basse densité linéaire et le polyéthylène basse densité.

4. Procédé selon la revendication 1 ou 2, dans lequel le sac ou film (22) est en un mélange de polyéthylène et d'amidon.

5. Procédé selon l'une quelconque des revendications 1 à 4, dans lequel le dispositif (10, 52, 62) est relié à l'extérieur de l'élément de siège.

6. Procédé selon l'une quelconque des revendications 1 à 5, dans lequel une coiffe (36) est placée dans le fond du moule (3) avant injection.

7. Procédé selon l'une quelconque des revendications 1 à 6, dans lequel le dispositif est enrobé au moins partiellement d'une couche de mousse avant d'être placé dans le sac ou film.

8. Garniture d'élément de siège, intégrant un dispositif (10, 52, 62) dans une mousse formée d'une seule pièce.

9. Garniture selon la revendication 8, obtenue par la mise en oeuvre du procédé selon l'une quelconque des revendications 1 à 6.

10. Elément de siège pour véhicule automobile comportant une garniture selon la revendication 8 ou 9.

11. Siège pour véhicule automobile comportant au moins un élément de siège selon la revendication 10.
